(19) Europäisches Patentamt / European Patent Office / Office européen des brevets

(11) **EP 4 160 948 A1**

(12) **EUROPEAN PATENT APPLICATION**

(43) Date of publication:
**05.04.2023 Bulletin 2023/14**

(21) Application number: **21200037.6**

(22) Date of filing: **30.09.2021**

(51) International Patent Classification (IPC):
**H04J 3/06** (2006.01)    **H04W 56/00** (2009.01)

(52) Cooperative Patent Classification (CPC):
**H04J 3/0664; H04W 56/0015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventor: **Striffler, Tobias**
**81669 München (DE)**

(74) Representative: **Siemens Patent Attorneys**
**Postfach 22 16 34**
**80506 München (DE)**

(54) **DETERMINING A SKEW BETWEEN A MASTER CLOCK AND A LOCAL CLOCK**

(57)  Embodiments herein generally involve a method for determining a skew between a master clock and a slave clock, particularly a local clock assigned to a network interface. In one embodiment, the master clock periodically transmits information blocks or SIBs wherein each of said information blocks comprises a timestamp of its transmission time as measured and generated by the master clock. A skew factor may be determined, which may be used for syntonizing the local clock with the master clock by determining an amount equal to said skew factor multiplied by a clock frequency of the local clock. The embodiments are suitable for gaining knowledge of a clock drift between the master and the slave clock along with an ability to compensate this clock drift.

EP 4 160 948 A1

**Description**

TECHNICAL FIELD

The present embodiments relate to a method for determining a skew between a master clock and a local clock. Specifically, the embodiments relate to a method for determining a skew between a local clock assigned to a wireless network node and a master clock, wherein said master clock periodically transmits information blocks over the network.

BACKGROUND

Wireless communication networks typically allow simultaneous communication between several independently operating wireless devices. In order to provide simultaneous communications, but also to provide communications in general, it is important to ensure that devices sending and receiving messages are synchronized with respect to each other.

An example of known synchronization protocols is the IEEE 1588 protocol, known as »Precision Time Protocol«, PTP, and currently revised in a draft version D1.6 laid open in a draft document entitled »Draft Standard for a Precision Clock Synchronization Protocol for Networked Measurement and Control Systems«, edited by the IEEE Instrumentation and Measurements Society on August, 2019.

Depending on the wireless network, however, additive or alternative measures for synchronizing network nodes or wireless devices participating in the wireless communication network may be applied.

In fifth generation or 5G wireless networks, for example, synchronization may be effected using a periodic distribution of System Information Blocks or SIB. Given a simplicity of such synchronization - by using a strict periodicity of the SIB distribution - it has become common practice to leave a clock drift between the master clock and the slave clock - i.e. a deviation in the clock frequencies of both clocks - uncorrected.

Instead of correcting the clock drift it has become common practice to re-synchronize the slave clock more frequently and, thus, increase the number of offset corrections. In other words, a clock drift is currently being prevented rather than corrected.

SUMMARY

Embodiments herein generally involve a method for determining a skew between a master clock and a slave clock, particularly a local clock assigned to a network interface.

In one embodiment, the master clock periodically transmits information blocks wherein each of said information blocks comprises a timestamp of its transmission time as measured and generated by the master clock.

In one embodiment, a network node or the local clock assigned to a network interface may receive a first information block and at least one subsequent information block of said periodically transmitted information blocks. Receiving a subsequent information block may include receiving an information block immediately succeeding the first information block, or, alternatively, an information block which follows the first information block in a later position of the periodic series distribution. In an exemplary embodiment a first and, e.g., third or fourth information block of said periodically transmitted information blocks may be received and used for the later method steps.

In one embodiment, a first time span between a reception time of the first information block and a reception time of the subsequent information block may be determined. Said reception times may be determined using said local clock, which may be the local clock assigned to the network interface or to the network node. Accordingly, the first time span may be regarded as a time span - determined by the local clock - between the reception of the first and the subsequent information block. According to another embodiment, the first time span may be expressed as an integer multiple of a period of said periodically transmitted information blocks.

In one embodiment, a first timestamp may be read from the first information block and a second timestamp may be read from the subsequent information block. A second time span may be calculated as a difference between the second timestamp and the first timestamp. The second time span may be regarded as a time span - determined by the master clock - between the transmission of the first and the subsequent information block.

In one embodiment, a skew factor is determined, the skew factor being a quotient of the second time span and the first time span.

A particular advantage of the present embodiments results in an ability to gain knowledge of a clock drift between the master and the slave clock along with an ability to compensate this clock drift.

Supporting a compensation of the clock drift in accordance with the present embodiments is superior to the previously practiced methods of preventing the clock drift by increasing the number of offset corrections since the compensation allows for better or at least equal synchronization performance while using the same or even cheaper hardware.

Another advantage of the present embodiments is that no additional signaling is required in addition to the existing periodic transmission of information blocks in order to implement the embodiments.

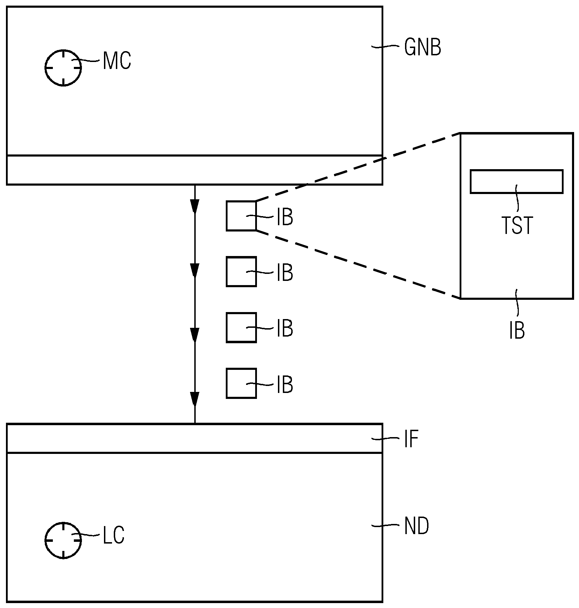

DESCRIPTION OF THE DRAWING

The objects as well as further advantages of the present embodiments will become more apparent and readily appreciated from the following description of the preferred embodiments, taken in conjunction with the accompanying drawing in which the sole figure illustrates a schematic diagram of an exemplary reception of information blocks periodically sent by a node comprising a master clock according to embodiments described herein.

DETAILED DESCRIPTION

FIG. shows a network node ND including a network interface IF. The network interface IF may be implemented as a wireless network interface. A device-internal or local clock LC is assigned to the network interface IF or to the node ND including the network interface IF.

A master clock MC is assigned to a further network node GNB. The master clock MC defines a reference time or master time for a network or a given segment of the network. The master clock MC - or more specifically, the network node GNB including said master clock MC - may periodically transmit information blocks IB whereby the transmission period is in the order of magnitude of approximately 10ms which roughly corresponds to a transmission rate of 100 Hz, i.e., one hundred information blocks IB being transmitted per second.

Each of said information blocks IB may comprise a timestamp TST by which the transmission time of a particular information blocks IB is recorded. Each timestamp TST may contain a point in time that was determined by or with the aid of the master clock at the time of transmission of the particular information blocks IB.

Reception of periodically transmitted information blocks by the network interface IF is symbolized by a series of arrows pointing towards the network interface IF.

Keeping consistent time among nodes ND in the network is a fundamental requirement. The internal clocks LC of nodes ND is usually not accurate enough and tend to drift apart from each other over time, generating inconsistent time values. Accordingly, a clock synchronization and/or syntonization may be necessary in regular time intervals.

Well-synchronized clocks are needed in many distributed computing applications whenever a common time reference has to be agreed among multiple devices ND. Distributed applications are widely used in industrial process control and many other application scenarios. Moreover, even in applications where clock synchronization within a given network is not mandatory, improved clock synchronization promotes efficient and precise operation.

Rates of the oscillators of physical clocks usually differ from each other, and the rates also vary with environmental perturbations, like changes in temperature. Timestamps reported by a physical clock are typically inconsistent to a global reference of time. A nonzero relative clock skew results if two clocks are not running at the same frequency. The relative clock skew between two clocks is represented either as a difference or the ratio of the frequencies of the two clocks. The knowledge of the relative clock skew between two clocks is needed for unifying the local readings of time durations.

A clock signal of the local clock LC or the master clock MC is generally understood as a physical signal that has periodic events. The periodic events mark the significant instants at which a time counter is incremented. The clock signal is characterized by its frequency, phase and time.

Synchronization or an act of synchronizing is generally understood as an adjustment of two electronic circuits, devices or nodes so as to operate at the same time. Syntonization or an act of syntonizing is generally understood as an adjustment of two electronic circuits, devices or nodes so as to operate at the same frequency.

Clock synchronization in packet based networks - as implicitly shown by the FIG. wherein both nodes GNB and ND are parts of a not shown network - has been subject of study for many years. Standards for a synchronization within networks NW include the Network Time Protocol or NTP and the Precision Time Protocol or PTP. The Precision Time Protocol gives superior performance by achieving sub-microsecond or even nanosecond accuracy.

Clock synchronization is particularly essential for time sensitive networks or TSN. Time sensitive networks can be generally defined as networks that may communicate at least some time sensitive data. As such, time sensitive networks need to be capable of communicating time sensitive data within an acceptable amount of time. While many of today's communications networks follow a best-effort approach, a best-effort approach is generally not suitable for time sensitive applications because even minor delays in the transmission and/or delivery of time sensitive content is unacceptable for such applications.

Time sensitive networks are a key challenge in a network infrastructure of flexible industrial production lines. Factories of the future encounter a growing data traffic among industrial devices. Wireless technologies for exchanging data penetrate industrial plant environments due to the advantages that these technologies possess over wired solutions. To that end, ubiquitous wireless network coverage within industrial environments is paramount. Strict real-time communication requirements have to be met irrespective of the underlying technology.

Communication networks have progressed through several different generations of technology and are sometimes referred to by a generation index such as 3G, or 4G for third or fourth generation networks. Access nodes in LTE - or above 4G wireless networks - can include a RAN Node such as a Node B (also commonly denoted as evolved Node B, enhanced Node B, eNodeB, or eNB) and/or Radio Network Controller or RNC. In fifth generation or 5G wireless networks, Access nodes can include a 5G Node, e.g., 5G eNB or gNB. The access nodes communicate with wireless user equipment, which is commonly referred to as user equipment or UE.

Current standardization efforts focus on fifth generation or 5G wireless networks combined with a time sensitivity of the network to form a 5G wireless communication network having TSN capabilities or, in other words, operating as a 5G-TSN integrated network. Respective wired communication technologies may complete the wireless capabilities of the 5G wireless communication network to form a hybrid network which is also referred to as converged network.

According to an embodiment, the network is at least partially operated as a 5G wireless communication network having TSN capabilities or, in other words, operating as a 5G-TSN integrated network. The 5G-TSN integrated network NW may include one or more access nodes GNB wirelessly communicating with and/or controlling at least one nodes ND acting as a user equipment or UE.

The node ND to be syntonized and/or synchronized may be or may act as a user equipment or UE or as a network device such as a sensor, a switch, a router or a gateway etc. The node ND may be syntonized and/or synchronized to a 5G master clock which may be implemented in at least one access nodes GNB as shown in the drawing.

In order to determine a skew between the local clock LC assigned to the node ND and the master clock LC, periodic transmissions of information blocks IB over the network are used according to the embodiments.

The master clock and/or the node GNB including the master clock MC periodically transmits information blocks which may be System Information Blocks (SIB) as known from the operation of fifth generation or 5G wireless networks. A 5G system offers synchronization via the periodic distribution of such SIBs. Each of said SIBs - or information blocks in general - comprises a timestamp of its transmission time. The transmission time is measured and/or generated by the master clock MC.

According to known practices, a clock drift between master and slave clocks is corrected by frequent re-synchronizations and thus offset corrections. These known practices, however, do not use any mechanism to determine the relative clock frequency offset between the master and the slave.

The embodiments, in turn, support an ability to gain knowledge of a clock drift between the master MC and the slave clock LC along with an ability to compensate this clock drift. Rather than preventing a clock drift in accordance with known practices, the embodiments support a compensation of the clock drift.

The network interface IF may be embodied for receiving one first information block IB and at least one subsequent information block IB of the sequence of periodically transmitted information blocks as shown in the drawing. An information block IB succeeding the first information block IB does not necessarily mean that the subsequent information block IB directly succeeds the first information block IB. In particular, the information block IB succeeding the first information block IB does not necessarily have to be the second information block IB. In other words, the third or fourth information block IB in the sequence of periodically transmitted information blocks may also be used.

A determination unit - not shown in the drawing - of the node ND may include one or more parts of a computer executable program code stored in a data storage device for processing by a processor, programmable processor, programmable controller, application specific integrated circuits, programmable logic devices and/or field programmable logic devices.

The determination unit of the node ND may be embodied for determining a first time span between a reception time of the first information block IB and a reception time of the subsequent information block IB, said reception times determined using said local clock LC. The first time span may be written as:

$$\Delta T_1 = T_{ND,i} - T_{ND,i-n}$$

Wherein $\Delta T_1$ denotes the first time span. $T_{ND,i}$ denotes the reception time of the subsequent information block IB received by the node ND at the time **i** and $T_{ND,i-n}$ denotes the reception time of the first information block IB received by the node ND at the time **i - n**. The value **n** is a natural positive number, denoting a counter of the period spacing between the information blocks IB. The index **ND** means that the reception time is determined by the node ND to which the local clock LC is assigned, or, more precisely: the receiving node ND determining its time according to a local clock LC assigned to the receiving node ND.

The determination unit may be further embodied for reading a first timestamp TST from the first information block IB and a second timestamp TST from the subsequent information block TST. The determination unit may be further embodied for calculating a second time span being a difference between the second timestamp and the first timestamp.

The second time span may be written as:

$$\Delta T_2 = T_{GNB,i} - T_{GNB,i-n}$$

Wherein $\Delta T_2$ denotes the second time *span*. $T_{CNB,i}$ denotes the transmission time of the subsequent information block IB as sent by the master node GNB at the time **i** This transmission time $T_{CNB,i}$ is recorded as a time stamp TST in said subsequent information block IB. $T_{GNB,i-n}$ denotes the transmission time of the first information block IB as sent by the master node GNB at the time **i - n**. This transmission time $T_{GNB,i-n}$ is recorded as a time stamp TST in said first information block IB.

The index **GNB** means that the transmission time is determined by the node GNB to which the master clock MC is assigned, or, more precisely: the master node GNB determining its time according to the master clock MC assigned to the sending master node GNB.

The determination unit may eventually be embodied for determining a skew factor being a quotient of the second time span and the first time span. The skew factor **RR** or rate ratio may accordingly be written as:

$$RR = \frac{T_{GNB,i} - T_{GNB,i-n}}{T_{ND,i} - T_{ND,i-n}}$$

the above equation expresses a reciprocal ratio between the master clock frequency and clock frequency of the node. This rate ratio may be calculated by comparing the same point in times of the periodic SIB message exchange over time.

According to an embodiment, the local clock LC may be syntonizing with the master clock MC by determining an amount equal to said skew factor **RR** multiplied by a clock frequency of the local clock in order to adjust the clock frequency of the local clock with the clock frequency of the master clock MC.

According to an embodiment, the local time of the local clock LC may be synchronized by determining an amount equal to said skew factor multiplied by a time elapsed since the local clock was last adjusted or synchronized.

According to an embodiment, a hardware implementation using physical layer timestamps rather than using the transmission time stored in the SIB and the receive time at the node ND may allow for even more accurate calculation of the skew factor.

In summary, the embodiments offer methods for determining an offset between a master clock and a slave clock, in particular a local clock that is assigned to a wireless network interface. In one embodiment, the master clock periodically transmits information blocks or SIBs wherein each of said information blocks comprises a timestamp of its transmission time as measured and generated by the master clock. A skew factor may be determined, which may be used for syntonizing the local clock with the master clock by determining an amount equal to said skew factor multiplied by a clock frequency of the local clock. The embodiments are suitable for gaining knowledge of a clock drift between the master and the slave clock along with an ability to compensate this clock drift.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

**Claims**

1. A method for determining a skew between a master clock and a local clock assigned to a network interface, wherein said master clock periodically transmits information blocks and wherein each of said information blocks comprises a timestamp of its transmission time as measured and generated by the master clock, said method comprising:

   a) receiving one first information block and at least one subsequent information block of said periodically transmitted information blocks;
   b) determining a first time span between a reception time of the first information block and a reception time of the subsequent information block, said reception times determined using said local clock;
   c) reading a first timestamp from the first information block and a second timestamp from the subsequent information block and calculating a second time span being a difference between the second timestamp and the first timestamp,
   d) determining a skew factor being a quotient of the second time span and the first time span.

2. The method according to claim 1, including the step of:
   e) syntonizing the local clock with the master clock by determining an amount equal to said skew factor multiplied by a clock frequency of the local clock.

3. The method according to one of the aforementioned claims, including the step of:
   f) synchronizing a local time of the local clock by determining an amount equal to said skew factor multiplied by a time elapsed since the local clock was last adjusted.

4. The method according to one of the aforementioned claims, including the step of expressing the first-time span as an integer multiple of a period of said periodically transmitted information blocks.

5. The method according to one of the aforementioned claims, wherein the information block is a system information block, SIB.

6. The method according to one of the aforementioned claims, wherein the information block is transmitted by a radio frame in a fifth generation communication network.

7. A network node for determining a skew between a local clock assigned to the network node and a master clock, wherein said master clock periodically transmits information blocks over a network and wherein each of said information blocks comprises a timestamp of its transmission time as measured and generated by the master clock, said network node comprising:

a) a network interface for receiving one first information block and at least one subsequent information block of said periodically transmitted information blocks;
b) a determination unit for determining a first time span between a reception time of the first information block and a reception time of the subsequent information block, said reception times determined using said local clock;
c) the determination unit for reading a first timestamp from the first information block and a second timestamp from the subsequent information block and calculating a second time span being a difference between the second timestamp and the first timestamp,
d) the determination unit for determining a skew factor being a quotient of the second time span and the first time span.

MC — GNB

IB
IB
IB
IB

TST

IB

IF

LC — ND

Europäisches
Patentamt

European
Patent Office

Office européen
des brevets

# EUROPEAN SEARCH REPORT

**Application Number**

EP 21 20 0037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/080817 A1 (MIHELIC JANEZ [SI]) 28 March 2013 (2013-03-28)<br>* paragraph [0005] *<br>* paragraph [0008] *<br>* paragraph [0012] *<br>* paragraph [0039] *<br>* paragraph [0084] *<br>* figures 1,2,5 * | 1-7 | INV.<br>H04J3/06<br>H04W56/00 |
| X | STRIFFLER TOBIAS ET AL: "The 5G Transparent Clock: Synchronization Errors in Integrated 5G-TSN Industrial Networks", 2021 IEEE 19TH INTERNATIONAL CONFERENCE ON INDUSTRIAL INFORMATICS (INDIN), IEEE, 21 July 2021 (2021-07-21), pages 1-6, XP033987375, DOI: 10.1109/INDIN45523.2021.9557468 [retrieved on 2021-10-01]<br>* section II-A *<br>* section II-B * | 1-7 | |
| A | GB 2 425 234 A (ZARLINK SEMICONDUCTOR INC [CA]) 18 October 2006 (2006-10-18)<br>* paragraph [0002] *<br>* paragraph [0009] – paragraph [0011] *<br>* paragraph [0020] – paragraph [0022] *<br>* paragraph [0028] *<br>* page 2 * | 1-7 | **TECHNICAL FIELDS SEARCHED (IPC)**<br><br>H04J<br>H04W |
| A | WO 2020/200947 A1 (NOKIA TECHNOLOGIES OY [FI]) 8 October 2020 (2020-10-08)<br>* paragraph [0005] *<br>* paragraph [0014] – paragraph [0016] *<br>* paragraph [0026] *<br>* paragraph [0031] *<br>* figure 2 * | 1-7 | |

The present search report has been drawn up for all claims

| Place of search | Date of completion of the search | Examiner |
|---|---|---|
| The Hague | 14 March 2022 | Marongiu, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 0037

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2022

| Patent document cited in search report | | Publication date | Patent family member(s) | | Publication date |
|---|---|---|---|---|---|
| US 2013080817 | A1 | 28-03-2013 | CN | 103814338 A | 21-05-2014 |
| | | | EP | 2734904 A2 | 28-05-2014 |
| | | | MY | 168816 A | 04-12-2018 |
| | | | SI | 2734904 T1 | 31-05-2018 |
| | | | US | 2013080817 A1 | 28-03-2013 |
| | | | US | 2016241381 A1 | 18-08-2016 |
| | | | US | 2018198598 A1 | 12-07-2018 |
| | | | US | 2018198599 A1 | 12-07-2018 |
| | | | WO | 2013066437 A2 | 10-05-2013 |
| GB 2425234 | A | 18-10-2006 | CN | 1905424 A | 31-01-2007 |
| | | | DE | 102006017208 A1 | 30-11-2006 |
| | | | FR | 2886791 A1 | 08-12-2006 |
| | | | GB | 2425234 A | 18-10-2006 |
| | | | US | 2006269029 A1 | 30-11-2006 |
| WO 2020200947 | A1 | 08-10-2020 | NONE | | |

EPO FORM P0459

For more details about this annex : see Official Journal of the European Patent Office, No. 12/82